# EUROPEAN PATENT SPECIFICATION

(11) **EP 2 646 685 B1**
(45) Date of publication and mention of the grant of the patent: **03.09.2014**
(21) Application number: 11799883.1
(22) Date of filing: 30.11.2011
(51) Int. Cl.: F03D 11/02, F03D 11/00, F03D 9/00

(54) **POWER GENERATING APPARATUS OF RENEWABLE ENERGY TYPE**
VORRICHTUNG ZUR STROMERZEUGUNG AUS ERNEUERBARER ENERGIE
APPAREIL GÉNÉRATEUR D'ÉNERGIE DU TYPE À ÉNERGIE RENOUVELABLE

(30) Priority: 30.11.2010 WO PCT/JP2010/006977; 30.11.2010 WO PCT/JP2010/006981; 05.04.2011 WO PCT/JP2011/058647; 22.09.2011 WO PCT/JP2011/071674; 22.09.2011 WO PCT/JP2011/071676; 22.09.2011 WO PCT/JP2011/071677
(43) Date of publication of application: 09.10.2013
(60) Divisional application: 13160517.2
(73) Proprietor: Mitsubishi Heavy Industries, Ltd., Tokyo 108-8215 (JP)
(72) Inventor: KAMEDA, Takuro, Tokyo, 1088215 (JP); ROBERTSON, Alasdair, Lothian, EH209TB (GB); DODSON, Henry, Lothian, EH209TB (GB); STEIN, Uwe, Lothian, EH209TB (GB)
(74) Representative: Hindle, Alistair Andrew
(86) International application number: PCT/JP2011/006695
(87) International publication number: WO 2012/073505

(56) References cited:
- EP-A1- 1 566 543
- EP-A2- 2 003 362
- WO-A1-2007/053036
- US-A1- 2010 032 959

## Description

### Technical Field

The present invention relates to a power generating apparatus of a renewable energy type which transmits rotation energy of a rotor via a hydraulic transmission that is a combination of a hydraulic pump and a hydraulic motor. The power generating apparatus of the renewable energy type generates power from a renewable energy such as wind, tidal current, ocean current and river current and, for instance, includes a wind turbine generator, a tidal generator, an ocean current generator, a river current generator or the like.
To improve power generation efficiency, it is desired to increase the size of the power generating apparatus of the renewable energy type. Particularly, wind turbine generators installed offshore are expensive to construct in comparison to those installed onshore and thus, it is desired to improve power generation efficiency by increasing the size of the wind turbine generator so as to improve profitability.

### Background Art

In recent years, from a perspective of preserving the environment, it is becoming popular to use a power generating apparatus of a renewable energy type such as a wind turbine generator utilizing wind power and a renewable energy type turbine generator such as a tidal current generator utilizing tidal. In the power generating apparatus of the renewable energy type, a motion energy of the wind, the tidal current, the ocean current or the river current is converted into the rotation energy of the rotor and the rotation energy of the rotor is converted into electric power by the generator.

In this type of the power generating apparatus of the renewable energy type, the rotation speed of the rotor is small compared to a rated speed of the generator and thus, it is necessary, in a conventional case, to provide a mechanical gearbox between the rotor and the generator. By this, the rotation speed of the rotor is increased to the rated speed of the generator by the gearbox and then inputted to the generator.

In recent years, the gear box tends to become heavier and more expensive as the power generating apparatuses of the renewable energy type are getting larger to improve power generation efficiency. Thus, a power generating apparatus of a renewable energy type equipped with a hydraulic transmission adopting a combination of a hydraulic pump and a hydraulic motor is getting much attention. Normally, the hydraulic transmission includes a hydraulic pump driven by a rotation of a rotor, a hydraulic motor connected to a generator and a pressurized-oil piping in which pressurized oil circulates.

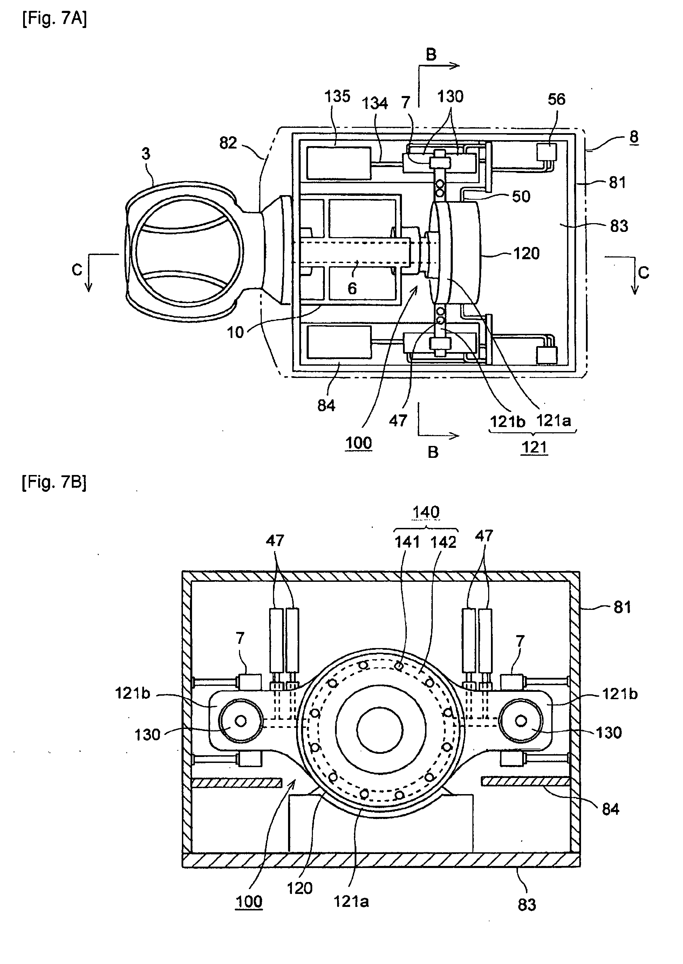

For instance, Patent Document 1 describes a wind turbine generator which transmits rotation energy of a rotor driven by a wind power to a generator via a hydraulic transmission. In the wind turbine generator, to design a nacelle lighter, the hydraulic motor and the generator are arranged at a bottom of the tower (See FIG.10 of Patent Document 1). In a similar manner, a wind turbine generator described in Patent Document 2 includes a hydraulic motor and a generator that are arranged at a bottom of a tower.
Patent Document 3 proposes a wind turbine generator in which all of the hydraulic pump, the hydraulic motor and the generator are arranged in the nacelle (See FIG.7 of
Patent Document 3). In the wind turbine generator, a supply piping and a return piping which are connected to the hydraulic pump are connected to the hydraulic motor.

Although not for the power generating apparatus of renewable energy type provided with the hydraulic transmission, a support for a wind turbine generator provided with a mechanical gearbox to support the mechanical gearbox by a nacelle via the support, is disclosed in Patent Literatures 4 and 5.
Patent Literature 6 discloses a wind turbine system comprising a hub, a shaft coupled to the hub, and a hydraulic pump disposed adjacent the shaft and configured to provide a pressurized fluid to a motor. Rotor blades can be attached to the hub. In one embodiment the hub rotates the shaft to drive the hydraulic pump.

### Citation List

### Patent Literature

PTL 1: WO 2010/033035
PTL 2: US 7569943
PTL 3: WO 2007/053036
PTL 4: CN 201982255 U
PTL 5: CN 201747854 U
PTL 6: US 2010/0032959 A

### Summary of Invention

### Technical Problem

The hydraulic pump of the power generating apparatus of renewable energy type, in some cases, is attached to the rotating shaft rotating with the blade. In such case, the hydraulic pump is configured with a rotary part which rotates with the rotating shaft, a pump housing remaining still when the rotating shaft rotates, and a pump bearing provided between the rotary part and the pump housing to allow a relative rotation between them. For the standpoint of preventing the pump housing from rotating with the rotating shaft, it is necessary to support the pump housing by the nacelle in such a manner that the pump housing can firmly receive the torque transmitted from the rotating shaft via the rotary part.

However, by fixing the pump housing to the nacelle in a rigid manner to receive the torque, the following issues arise.

Specifically, the rotating shaft of the renewable energy power generating apparatus is subjected to heavy load from energy flow of the renewable energy, thereby causing the rotating shaft to bend. The energy flow is wind load in the case of a wind turbine generator. However, if the pump housing is fixed to the nacelle rigidly, the rotating shaft is constrained by the pump housing and the nacelle, causing the load from the bending of the rotating shaft to be concentrated on the main shaft bearing and the pump bearing of the hydraulic pump which supports the rotating shaft. Particularly, attempts to increase the size of the rotor have been made in recent years to improve power generation efficiency. Accordingly, the load from the energy flow of the renewable energy increases and it becomes increasingly important to reduce the load concentration on the main shaft bearing and the pump bearing.

However, in Patent Documents 1 to 3, a specific structure for supporting the hydraulic pump by the nacelle is not disclosed and no solution for the issue of the load concentration caused by the bending of the rotating shaft is proposed.

In view of the above issue, the inventors were inspired to make a pump support structure of supporting the hydraulic pump by the nacelle such as to allow displacement of the hydraulic pump in a direction orthogonal to the axis of the rotating shaft (hereinafter, called as the orthogonal direction) while positively receiving the torque acting on the hydraulic pump from the rotating shaft. In such pump support structure, the displacement of the hydraulic pump in the vertical direction is allowed and thus, the rotating shaft is basically not constrained by the hydraulic pump, hence significantly reducing the concentrated load caused by the bending of the rotating shaft. This type of support structure is similar to the support via which the mechanical gearbox is supported by the nacelle as disclosed in Patent Literatures 4 and 5. However, in the pump support structure, only the vertical displacement of the hydraulic pump is allowed and a relative displacement between the hydraulic pump and the hydraulic motor still occurs. This generates significant load on pressurized-oil pipings connecting the hydraulic pump and the hydraulic motor.

In view of the above issues, it is an object of the present invention to provide a power generating apparatus of renewable energy type which is capable of reducing the load on the pressurized-oil piping caused by the relative displacement between the hydraulic pump and the hydraulic motor.

### Solution to Problem

An aspect which does not form part of the present invention is a lower generating apparatus of a renewable energy type which generates power from a renewable energy. The power generating apparatus may include, but is not limited to:
a hub on which a rotor blade is mounted and which is rotated by the renewable energy received via the rotor blade;
a rotating shaft which is connected to the hub;
a hydraulic pump which is mounted on the rotating shaft and which is driven by rotation of the rotating shaft;
a hydraulic motor which is driven by pressurized oil from the hydraulic pump;
a generator which is coupled to the hydraulic motor;
a support which provides a reaction torque to the hydraulic pump from the rotating shaft while allowing a displacement of the hydraulic pump in a direction perpendicular to an axis of the rotating shaft, the hydraulic pump being supported by a nacelle through the support; and
a pressurized-oil piping which is at least partially constituted of a flexible tube and which connects an outlet port of the hydraulic pump to an inlet port of the hydraulic motor to supply the pressurized oil from the hydraulic pump to the hydraulic motor. The flexible tube is a tube having flexibility and can be flexed freely to some extent. The material of the flexible tube is not limited as long as being able to withstand an expected pressure of the pressurized oil during the operation of the power generating apparatus of renewable energy type (e.g. 350kgf/cm²). For instance, the flexible tube may be a tube which is made from various types of metal or resin such as PTFE, POM, PA, PVDF, FEP and PUR and which is reinforced with a steel wire such as a stainless wire.

In the above power generating apparatus of the renewable energy type, the support is provided so that the hydraulic pump is supported by the nacelle via the support. The support provides a reaction torque to the hydraulic pump from the rotating shaft while allowing a displacement of the hydraulic pump in a direction perpendicular to an axis of the rotating shaft. Therefore, it is possible to reduce the concentrated load on the main shaft bearing and the pump bearing caused by the bending of the rotating shaft while preventing the stationary part of the hydraulic pump (the pump housing) from rotating with the rotating shaft.

On the other hand, by allowing the vertical displacement of the hydraulic pump, the relative displacement between the hydraulic pump and the hydraulic motor which is not directly connected to the rotating shaft still occurs. By making the entire pressurized-oil pipings connecting the hydraulic pump and the hydraulic motor as a rigid piping structure, significant load is generated on pressurized-oil pipings connecting the hydraulic pump and the hydraulic motor. The rigid piping structure is a piping structure which is configured by piping with high rigidity.

Therefore, in the above power generating apparatus of renewable energy type, the pressurized-oil piping is at least partially constituted of a flexible tube. By this, the relative displacement between the hydraulic pump and the hydraulic motor is absorbed by deformation of the flexible tube to reduce the load on the piping. As the temperature of the pressurized oil in the pressurized-oil line is high, heat stress is generated due to thermal expansion of the pressurized-oil piping. However, by forming the pressurized-oil piping at least partially by the flexible tube, it is possible to effectively absorb the thermal expansion of the pressurized-oil piping by the deformation of the flexible tube, suppressing the generation of the heat stress.

In the above power generating apparatus of the renewable energy type, the outlet port of the hydraulic pump may be arranged across a plane from the inlet port of the hydraulic motor, the plane being orthogonal to a line extending from the inlet port of the hydraulic motor to central axis of the hydraulic pump and along the central axis, and the pressurized-oil piping passes through the plane to extend from the inlet port to the outlet port.

Normally, the flexible tube has characteristics such as a minimum bending radius which is prescribed in accordance with the material, the size and so on. It is known that the use of the flexible tube at the bending radius below the minimum-bending radius shortens the life of the flexible tube. Herein, the greater the distance between the outlet port of the hydraulic pump and the inlet port of the hydraulic motor, the longer the flexible tube can be. Thus, the bending radius of the flexible tube is not much affected by the absorption of the relative displacement between the hydraulic pump and the hydraulic motor. For instance, in comparison of one flexible tube having a length of L1 and another flexible tube having a length of L2 (<L1), after absorbing the relative displacement, a change of the bending radius is smaller in the one flexible tube with the length L1 than the other flexible tube with the length L2. Therefore, to use the flexible tube at the bending radius not less than the minimum bending radius, it is preferable to arrange the outlet port of the hydraulic pump and the inlet port of the hydraulic motor as far away from each other as possible to suppress the change of the bending radius of the flexible tube caused by the absorption of the relative displacement between the hydraulic pump and the hydraulic motor.

However, with space restriction inside the nacelle, the hydraulic motor may be inevitably arranged near the hydraulic pump. In such case, the distance between the outlet port of the hydraulic pump and the inlet port of the hydraulic motor can be increased only to a certain extent.

In this aspect, by arranging the outlet port of the hydraulic pump across the plane from the inlet port of the hydraulic motor(the plane is orthogonal to the line extending from the inlet port to the central axis of the hydraulic pump and along the central axis), even in the case where the hydraulic motor is inevitably arranged near the hydraulic pump due to the space restriction in the nacelle, it is possible to secure enough length of the pressurized-oil piping connecting the outlet port and the inlet port. As a result, it is possible to increase the length of the flexible tube so as to suppress the change of the bending radius of the flexible tube caused by the absorption of the relative displacement between the hydraulic pump and the hydraulic motor, and to use the flexible tub at the bending radius not less than the minimum bending radius.

In the above power generating apparatus of the renewable energy type, the hydraulic pump may be mounted on an end of the rotating shaft which is farther from the hub, the hydraulic pump may include an endplate which constitutes an end face of the hydraulic pump located on a side facing towards the hub, the endplate having an arm part which projects radially outward from the hydraulic pump, and the arm part of the hydraulic pump may be supported by the nacelle via the support.

By mounting the hydraulic pump on the end of the rotating shaft which is farther from the hub, it is easy to perform the maintenance of the hydraulic pump from a rear side of the hydraulic pump. A front side is used to describe a side facing toward the hub and the rear side is used to describe a side that is farther from the hub in the axial direction of the rotating shaft. Further, by providing the endplate having the arm part and supported by the nacelle via the support towards the hub (on the front side), the support structure of the endplate including the arm part and the support does not get in the way when performing the maintenance on the hydraulic pump from the rear side of the hydraulic pump.

In such case, the outlet port may be provided in the endplate which constitutes the end face of the hydraulic pump located on the side facing towards the hub.

By this, it is possible to arrange the pressurized-oil piping connecting the outlet port of the hydraulic pump to the inlet port of the hydraulic motor in a space on the front side within the nacelle, thereby further improving the ease of performing the maintenance from the rear side of the hydraulic pump.

In the above power generating apparatus of the renewable energy type, the hydraulic motor is arranged lateral relative to an axis of the hydraulic pump, and the generator may be located between the hub and the hydraulic motor.

By this, the hydraulic motor and the generator are not arranged on the rear side of the hydraulic pump, leaving enough maintenance space on the rear side of the hydraulic pump. As a result, it is possible to further improve the ease of performing the maintenance.

The generator which is normally larger in size than the hydraulic motor is arranged between the hub and the hydraulic motor (i.e. on the front side of the hydraulic motor). Thus, when the crane lifts the hydraulic motor, the crane does not move over the generator. As a result, the ease of performing the maintenance is further enhanced.

In the above power generating apparatus of the renewable energy type, the pressurized-oil piping may include, but is not limited to, the flexible tube, a first rigid coupling which connects a first end of the flexible tube to the outlet port of the hydraulic pump, a second rigid coupling which connects a second end of the flexible tube to the inlet port of the hydraulic motor, and an accumulator may be connected to the second rigid coupling.

Due to the action of the flexible tube, the second rigid coupling which connects the pressurized-oil piping partially formed by the flexible tube and the inlet port of the hydraulic motor is hardly affected by the vertical displacement of the hydraulic pump. Thus, by connecting the accumulator to the second rigid coupling, even when there is displacement between the hydraulic pump and the accumulator, the accumulator can be supported to the nacelle side in a stable manner by a simple structure.

The above power generating apparatus of the renewable energy type may further include a base plate which is supported by the nacelle via at least one of an elastic member and a damper mechanism and on which the hydraulic motor and the generator are mounted.

In the above power generating apparatus of the renewable energy type, the hydraulic motor and the generator are rotating machines and respectively vibrate as well. Thus, by mounting the hydraulic motor and the generator on the base plate supported by the nacelle via at least one of the elastic member and the damper mechanism, it is possible to damp the vibration of the hydraulic motor and the generator and it is also possible to firmly support the hydraulic motor and the generator by the nacelle.

An aspect of the present invention is a power generating apparatus of a renewable energy type which generates power from a renewable energy and which includes, but is not limited to:
a hub on which at least one blade is mounted and which is rotated by the renewable energy received via the rotor blade;
a rotating shaft which is connected to the hub;
a hydraulic pump which is mounted on the rotating shaft and which is driven by rotation of the rotating shaft;
a hydraulic motor which is driven by pressurized oil from the hydraulic pump; and
a generator which is coupled to the hydraulic motor. The hydraulic pump comprises an endplate having an arm part which projects radially outward from the hydraulic pump, the endplate is formed with an interior channel through which the pressurized oil flows to the arm part, and the hydraulic motor is fixed to the arm part and fluidly communicates with the hydraulic pump via the interior channel.

In the above power generating apparatus of the renewable energy type, the hydraulic motor is fixed to the arm part which constitutes a part of the end plate of the hydraulic pump and thus, there is almost no relative displacement between the hydraulic pump and the hydraulic motor. It is now possible to eliminate the load caused by the relative displacement between the hydraulic pump and the hydraulic motor. Further, the endplate having the arm part projecting outward in the radial direction constitutes the end face of the hydraulic pump. The hydraulic motor attached to the arm part is fluidly connected with the hydraulic pump via the internal flow path formed inside the end plate having the arm part and thus, it is not necessary to provide a piping between the hydraulic pump and the hydraulic motor. Therefore, it is possible to avoid issues which arise in the case of providing a piping between the hydraulic pump and the hydraulic motor, such as thermal expansion of the piping and leaking of the oil from the connection part between the pipings.

The above power generating apparatus of the renewable energy type may further include a support which provides a reaction torque to the hydraulic pump from the rotating shaft while allowing a displacement of the hydraulic pump in a direction perpendicular to an axis of the rotating shaft, the arm part of the hydraulic pump being supported by a nacelle through the support.

The support is provided so that the arm part of the hydraulic pump is supported by the nacelle through the support. By this, the torque loaded on the hydraulic pump from the rotating shaft can be received by the support while allowing the displacement of the hydraulic pump in the orthogonal direction. Thus, a stationary part of the hydraulic pump (the pump housing) is prevented from rotating with the rotating shaft and the concentrated load on the main shaft bearings and the pump bearing due to the bending of the rotating shaft can be reduced.

In such case, the hydraulic pump may be fixed to an end of the rotating shaft which is farther from the hub, and the endplate may constitute an end face of the hydraulic pump located on a side facing towards the hub.

In this manner, by fixing the hydraulic pump to the rear end of the rotating shaft, operator's access to the hydraulic pump from the rear side of the hydraulic pump is improved and thus, it is easy to perform the maintenance of the hydraulic pump. Further, by providing the endplate having the arm part and supported by the nacelle via the support towards the hub (on the front side), the support structure of the endplate including the arm part and the support does not get in the way when performing the maintenance on the hydraulic pump from the rear side of the hydraulic pump.

Further, in the above case, the power generating apparatus may further include a main shaft bearing through which the rotating shaft is rotatably supported by the nacelle, and the hydraulic pump may be fastened to a bearing housing of the main shaft bearing via a vibration insulating bush.

In this manner, by fastening the hydraulic pump to the bearing housing of the main shaft, the hydraulic pump can be supported firmly while damping change of position of the hydraulic pump by the vibration insulating bushes.

Furthermore, in the above case, the hydraulic motor may include a pair of motor modules that have the same structure, and the pair of the motor modules may have output shafts that are coupled to each other inside the arm part.

By this, the motor modules are supported on the front and rear faces of the arm part and thus a shaft length from the support point becomes shorter. Thus, the vibration of the hydraulic motor can be suppressed.

Meanwhile, each of the pair of the motor modules may include a plurality of sets of:
a cylinder; a piston sliding inside the cylinder by the pressurized oil; an eccentric cam rotated by the piston, the plurality of sets being arranged in an axial direction of the hydraulic motor, and the eccentric cams of the sets may be different from each other in phase.
In this manner, the eccentric cams of the plurality of the sets arranged in the axial direction of the hydraulic motor are arranged different from each other in phase. As a result, vibrations from the motor modules are balanced, thereby suppressing the vibrations.

Further in the above case, an accumulator may be fixed to the endplate, said accumulator being fluidly connected to the interior channel.

In this manner, the accumulator connected fluidly to the interior channel is fixed to the front endplate. Thus, there is almost no displacement between the interior channel formed in the front endplate and the accumulator, making it hard for the pressurized oil to leak.

Furthermore, the power generating apparatus of the renewable energy type may be a wind turbine generator which generates power from wind as a form of the renewable energy.

### Effects of The Invention

In the aspect, which does not form part of the present invention, the support is provided so that the hydraulic pump is supported by the nacelle via the support and the support provides a reaction torque to the hydraulic pump from the rotating shaft while allowing a displacement of the hydraulic pump in the orthogonal direction. Therefore, it is possible to reduce the concentrated load on the main shaft bearing and the pump bearing caused by the bending of the rotating shaft while preventing the stationary part of the hydraulic pump (the pump housing) from rotating with the rotating shaft. Further, the pressurized-oil piping is at least partially constituted of a flexible tube and thus, the relative displacement between the hydraulic pump and the hydraulic motor is absorbed by deformation of the flexible tube to reduce the load on the piping. Furthermore, the pressurized-oil piping is at least partially formed by the flexible tube and thus, it is possible to effectively absorb the thermal expansion of the pressurized-oil piping by the deformation of the flexible tube, suppressing the generation of the heat stress.

In the aspect of the present invention, the hydraulic motor is fixed to the arm part which constitutes a part of the end plate of the hydraulic pump and thus, there is almost no relative displacement between the hydraulic pump and the hydraulic motor. It is now possible to eliminate the load caused by the relative displacement between the hydraulic pump and the hydraulic motor. Further, the endplate having the arm part projecting outward in the radial direction constitutes the end face of the hydraulic pump. The hydraulic motor attached to the arm part is fluidly connected with the hydraulic pump via the internal flow path formed inside the end plate and thus, it is no longer necessary to provide a piping between the hydraulic pump and the hydraulic motor. Therefore, it is possible to avoid issues which arise in the case of providing a piping between the hydraulic pump and the hydraulic motor, such as thermal expansion of the piping and leaking of the oil from the connection part between the pipings.

### Brief Description of Drawings

[fig.1]FIG.1 is a schematic view showing an example structure of a wind turbine generator.
[fig.2A]FIG.2A is a plan view showing an example structure of devices in a nacelle in relation to a first example, which does not form part of the present invention.
[fig.2B]FIG.2B is a side view showing the example structure of the devices in the nacelle in relation to the first example.
[fig.3]FIG.3 is a cross-sectional view taken along a line A-A of FIG.2A.
[fig.4]FIG.4 is a perspective view illustrating a hydraulic transmission and a generator in relation to the first example.
[fig.5A]FIG.5A is a drawing describing a working principle of a support with respect to a torque.
[fig.5B]FIG.5B is a drawing describing the working principle of the support with respect to a load in a vertical direction.
[fig.6A]FIG.6A is a drawing illustrating a relationship between a relative displacement between a hydraulic pump and a hydraulic motor and a bending radius of a flexible tube.
[fig.6B]FIG.6B is a drawing illustrating a relationship between a relative displacement between a hydraulic pump and a hydraulic motor and a bending radius of a flexible tube.
[fig.7A]FIG.7A is a plan view showing an example structure of the devices in the nacelle in relation to an embodiment of the present invention.
[fig.7B]FIG.7B is a cross-sectional view taken along a line B-B of FIG.7A.
[fig.8]FIG. 8 is a perspective view of the hydraulic pump and the hydraulic motor.
[fig.9]FIG. 9 is a cross-sectional view of a section D of FIG.8.
[fig.10]FIG. 10 is a cross-sectional view showing an example structure of the hydraulic motor.
[fig.11]FIG. 11 is a perspective view showing an example structure of the devices in the nacelle in relation to a modified example of the embodiment the present invention.
[fig.12]FIG.12 is a perspective view of the hydraulic pump showing a connecting plane to a bearing housing.

### Description of Embodiments

Examples and embodiments of the present invention will now be described in detail with reference to the accompanying drawings. It is intended, however, that unless particularly specified, dimensions, materials, shape, its relative positions and the like shall be interpreted as illustrative only and not limitative of the scope of the present.

### (FIRST EXAMPLE)

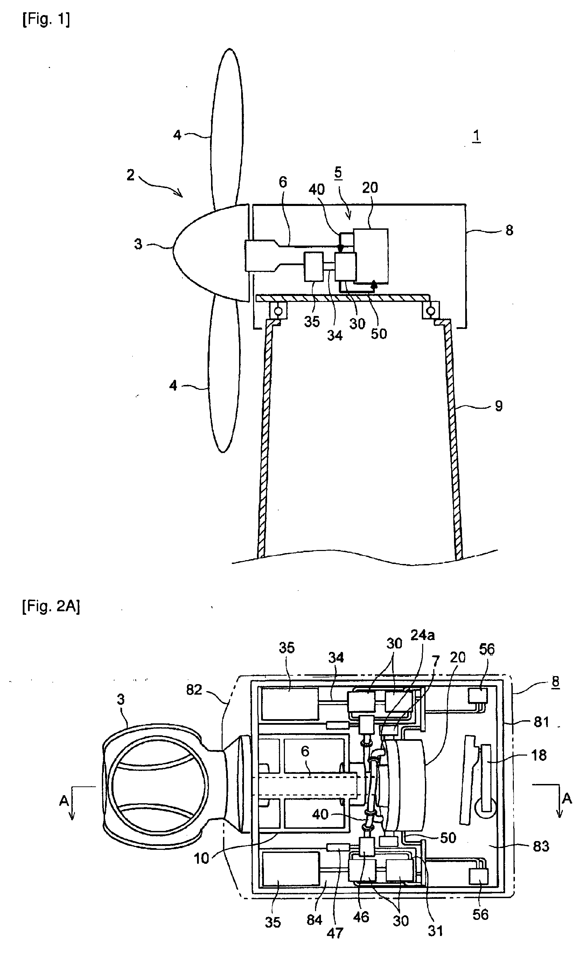

In reference to FIG.1, a schematic structure of a wind turbine generator 1 is explained. FIG.1 is a schematic view showing an example structure of the wind turbine generator 1.

In the example, the wind turbine generator 1 of a propeller type is described as an example. However, the present invention is not limited to this example and can be applied to various types of wind turbine generators.

As illustrated in FIG.1, the wind turbine generator 1 mainly includes a rotor 2 rotated by the wind, a hydraulic transmission 5 for increasing rotation speed of the rotor 2, a generator 35 for generating electric power, a nacelle 8 and a tower 9 for supporting the nacelle 8.

The rotor 2 is constructed such that a rotating shaft 6 is connected to a hub 3 having blades 4. For instance, three blades 4 extend radially from the hub 3 and each of the blades 4 is mounted to the hub 3 connected to the rotating shaft 6. By this, the wind power acting on the blades 4 turns the entire rotor 2, the rotation of the rotor 2 is inputted to the hydraulic transmission 5 via the rotating shaft 6.

The hydraulic transmission 5 is arranged in the nacelle 8. The hydraulic transmission 5 includes a hydraulic pump 20 of a variable displacement type which is rotated by the rotating shaft 6, a hydraulic motor 30 of a variable displacement type which is connected to the generator 35, and a pressurized-oil pipings which connecting the hydraulic pump 20 and the hydraulic motor 30 fluidly. The pressurized-oil line includes a high-pressure oil line 40 and a low-pressure oil line 50. By this, the rotation of the rotating shaft 6 rotates the hydraulic pump 20, thereby creating a pressure difference between a high-pressure oil flowing in the high-pressure oil line 40 and a low-pressure oil line flowing in the low pressure oil line 50. The pressure difference drives the hydraulic motor 30.

The generator 35 is connected to an output shaft 34 of the hydraulic motor 30 and generates power by torque from the hydraulic motor 30.

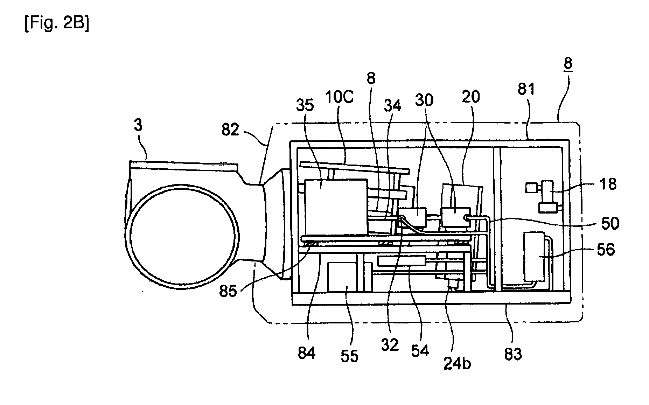

In reference to FIG.2 to FIG.4, structures of the hydraulic transmission 5 and surrounding devices are explained in detail.

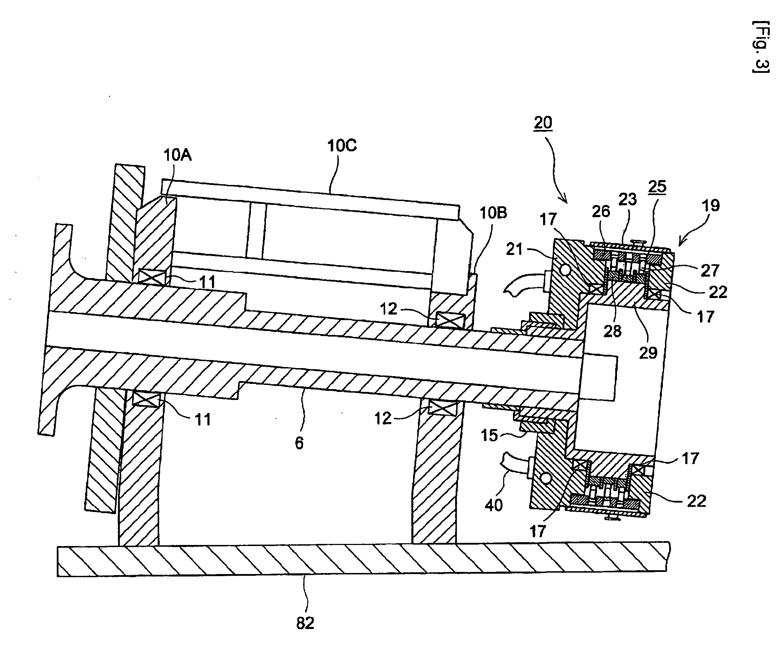

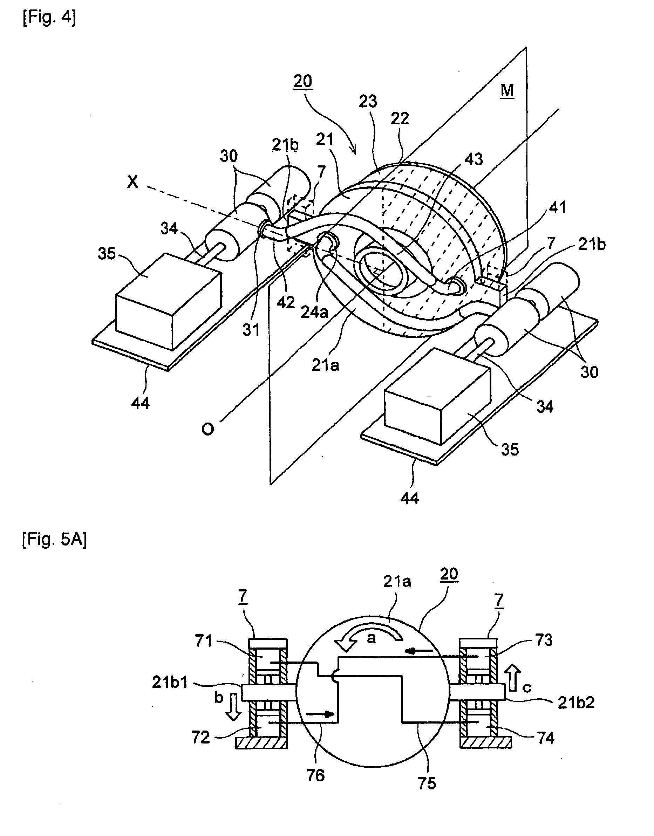

FIG.2A is a plan view showing an example structure of the devices in the nacelle in relation to the first example. FIG.2B is a side view showing the example structure of the devices in the nacelle in relation to the first embodiment. FIG.3 is a cross-sectional view taken along a line A-A of FIG.2A. FIG.4 is a perspective view illustrating the hydraulic transmission and the generator in relation to the first example.

As shown in FIG.2A and FIG.2B, the nacelle 8 is provided with a frame 81 forming a space where the devices are installed and a nacelle cover 82 covering an outside of the frame 81. In the specification, to describe a layout in the space of the nacelle, a front side is used to describe a side facing toward the hub 3 in an axial direction of the rotating shaft 6 and a rear side is used to describe a side that is farther from the hub 3 in the axial direction of the rotating shaft 6. The frame 81 is supported rotatably in a yaw direction to the tower 9. The frame 81 has a base plate 83 at a bottom. On the base plate 83, devices are installed.

As shown in FIG.3, a pair of main shaft bearings 11 and 12 are provided in the space of the nacelle to support the rotating shaft 6. Specifically, the front main shaft bearing 11 supports a front part of the main shaft 6, whereas the rear main shaft bearing 12 supports a rear part of the main shaft 6. The main shaft bearings 11 and 12 are housed in bearing housings 10A and 10B respectively. From the standpoint of improving rigidity of the rotor 2 with respect to bending load or the like, the bearing housings 10A and 10B are connected to each other by a connection frame 10C and the nacelle 8. Thus, each of the bearing housings 10A and 10B is supported by the nacelle 8. The rotating shaft 6 is connected to the hub at a front end and to the hydraulic pump 20 at a rear end.

The hydraulic pump 20 is driven by the rotation of the rotating shaft 6. In the hydraulic pump 20, a pump housing 19 is formed by a cylindrical member 23, a front endplate 21 provided on the front side of the cylindrical member 23 and a rear endplate 22 provided on the rear side of the cylindrical member 23. In the pump housing 19, a pump module 25 is provided.

The pump module 25 is configured with a cylinder 26, a piston 27 and a cam 28. The cam 28 is formed into a circular shape and is fixed to an outer periphery of a cylindrical member 29. The cylindrical member 29 is connected to a rear end of the rotating shaft 6 via a shrink-disk coupling structure 15. By this, the rotation of the rotating shaft 6 is transmitted to the cylindrical member 29 via the shrink-disk coupling structure 15 to rotate the cam 28. The rotating shaft 6 and the cylindrical member 29 are connected by the shrink-disk coupling structure 15 or other coupling structures such as a flange coupling, a key coupling and an involute spline coupling.

In this manner, by fixing the hydraulic pump 20 to the rear end of the rotating shaft 6, operator's access to the hydraulic pump 20 from the rear side of the hydraulic pump 20 is improved and thus, it is easy to perform the maintenance of the hydraulic pump 20. Specifically, the space on the rear side of the hydraulic pump 20 in the nacelle can be used for performing the maintenance. During the maintenance, as shown in FIG.2A and FIG.2B, a crane 18 for operation which is provided in a posterior region of the space in the nacelle may be used to perform the maintenance.

During the operation of the wind turbine generator, the crane 18 is folded. When performing maintenance of the wind turbine generator 1, the crane 18 is extended or contracted to an operation position and is used for moving or disassembling devices such as the hydraulic pump 20 and the hydraulic motor 30. In this process, the rotating shaft 6 projecting from the rear side of the hydraulic pump 20 interferes with the operation. In the above structure with the hydraulic pump 20 fixed to the rear end of the rotating shaft 6, it is possible to leave a space on the rear side of the hydraulic pump 20, thereby improving ease of performing the maintenance.

FIG.4 shows the front endplate 21 of the hydraulic pump 20. The front endplate 21 includes an annular part 21a formed along the end face of the hydraulic pump 20 and arm parts 21b projecting in a radial direction of the annular part 21a. The arm part 21b is supported by the frame 81 via a support 7. By this, the hydraulic pump 20 is supported by the nacelle. The front endplate 21 may be a single-piece member with the annular part 21a and the armparts 21b formed integrally, or may be configured by forming the annular part 21a and the arm parts 21b separately and connecting the pieces by a fastening member. In this manner, by supporting the hydraulic pump 20 by the nacelle 8 via the arm parts 21b of the endplate facing towards the hub 3, it is easy to access the hydraulic pump 20 and the hydraulic motor 30 from the space behind the hydraulic pump 20, thereby further improving the ease of performing the maintenance.

The support 7 is configured to receive the torque applied to the hydraulic pump 20 from the rotating shaft 6 while allowing a displacement of the hydraulic pump 20 (specifically, the pump housing 19) in a direction orthogonal to the axis of the rotating shaft 6 (hereinafter called the orthogonal direction).

The hydraulic pump 20 is configured such that a rotating part (the cylindrical member 29 and the cam 28) rotating with the rotating shaft 6 and the pump housing 19 remaining still when the rotating shaft 6 rotates, can rotate relatively by means of the pump bearing 17. This generates a relative rotation of the cam 28 with respect to the piston 27 supported by the pump housing 19, thereby raising the pressure of the operating oil in the hydraulic pump 20. To make the hydraulic pump 20 normally, it is necessary to firmly receive the torque transmitted to the pump housing 19 from the rotating shaft 6 via the rotating part of the hydraulic pump 20. Therefore, in the example, the support 7 is provided to receive torque on the pump housing 19 from the rotating shaft 6.

The rotating shaft 6 of the wind turbine generator 1 being subjected to the wind load inputted from the blade 4, is acting to bend. If the pump housing 19 is fixed to the nacelle 8 rigidly, the rotating shaft 6 is bounded by the pump housing 19 and the nacelle 8, causing the load caused by the bending of the rotating shaft to be concentrate on the first main shaft bearing 11, the second main shaft bearing 12 and the pump bearing 17. Therefore, the support 7 supports the pump housing 19 to allow a displacement of the hydraulic pump 20 in a direction orthogonal to the axis of the rotating shaft 6 (hereinafter called as the orthogonal direction). By this, it is possible to reduce the concentrated load acting on the main shaft bearings 11 and 12 and the pump bearing 17 due to the bending of the rotating shaft 6.

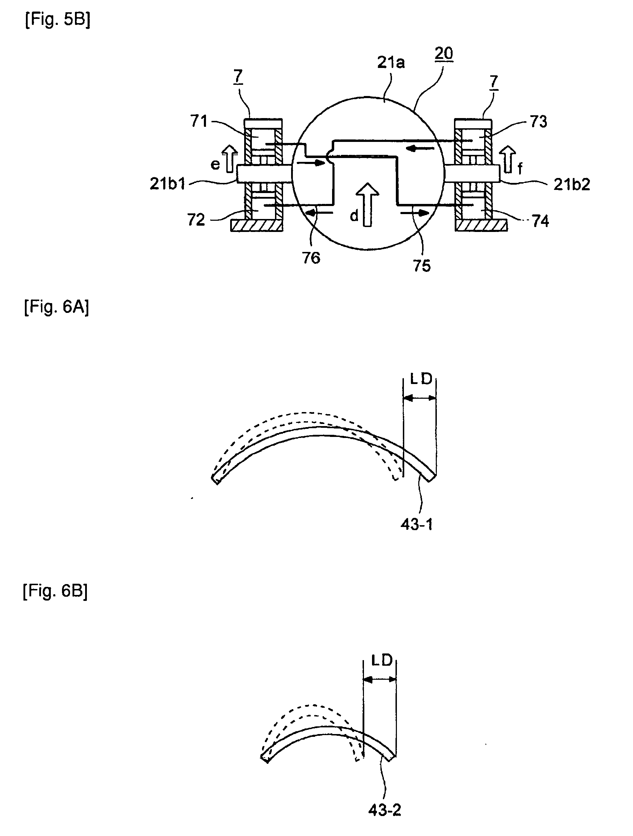

In reference to FIG.5A and FIG.5B, an example structure of a hydraulic support 7 is explained. FIG.5A is a drawing describing a working principle of a support with respect to a torque. FIG.5B is a drawing describing the working principle of the support with respect to a load in the orthogonal direction.

As shown in FIG.5A and FIG.5B, the hydraulic pump 20 is provided with a pair of the arm parts 21b projecting from both sides in the horizontal direction. For ease of explanation, one of the arm parts 21b is described as a first arm part 21b1 and the other of the arm parts 21b is described as a second arm part 21b2. The support 7 is configured with: a first oil chamber 71 and a second oil chamber 72 arranged above and below the first arm part 21b1; a third oil chamber 73 and a fourth oil chamber 74 arranged above and below the second arm part 21b2; a first piping 75 connecting the first oil chamber 71 and the fourth oil chamber 74; and a second piping 76 connecting the second oil chamber 72 and the third oil chamber 73. The oil chambers and the pipings are filled with oil which is an incompressible fluid.

Each of the oil chambers 71 to 74 changes volume depending on a position of the first or second arm part 21b1 and 21b2 in the vertical direction.

As shown in FIG.5A, when the torque is applied from the rotating shaft 6 to the hydraulic pump 20 (in a direction of an arrow a), a load is added from the first arm part 21b1 to the second oil chamber 72 in a direction of an arrow b and a load is added from the second arm part 21b2 to the third oil chamber 73 in a direction of an arrow c. By this, support oil in the second oil chamber 72 and the third oil chamber 73 that are in communication via the second piping 76 is pressurized. And by the pressurized support oil, reaction forces are applied to the first arm part 21b1 in a direction opposite to the direction of the arrow b and to the second arm part 21b2 in a direction opposite to the direction of the arrow c respectively. By the reaction forces, the displacement of the hydraulic pump 20 in the direction of the torque is prevented.

As shown in FIG.5B, when a force which acts to displace the hydraulic pump in the orthogonal direction (the direction of the arrow d) such as the bending of the rotating shaft 6 is added, a load in a direction of an arrow e is added from the first arm part 21b1 to the first oil chamber 71, and a load in a direction of an arrow f is added from the second arm part 21b2 to the third oil chamber 73. By this, the oil in the first oil chamber 71 is pushed out by an amount according to an upward movement of the first arm part 21b1 and flows into the fourth oil chamber 74 via the first piping 75. In a similar manner, the oil in the third oil chamber 73 is pushed out by an amount according to an upward movement of the second arm part 21b2 and flows into the second oil chamber 72 via the second piping 76. In this manner, the force acting to displace the hydraulic pump 20 in the orthogonal direction (the direction of the arrow d) is added, the oil moves between the oil chambers which communicate via each of the pipings 75 and 76 and thus, there is no reaction force against the force acting on the hydraulic pump 20 in the direction of the arrow d. Therefore, the displacement of the hydraulic pump 20 in the orthogonal direction is allowed.

FIG.5B illustrates how the displacement of the hydraulic pump 20 in the vertical direction (the direction of the arrow d) is allowed but a displacement of the hydraulic pump 20 in a horizontal direction can be allowed as well. To allow the horizontal displacement of the hydraulic pump 20, for instance, an area of contact between the arm part 21b1, 21b2 and the support 7 may be configured to lower a friction coefficient. With the above configuration of the support 7, the support 7 can support the hydraulic pump 20 to receive the torque on the hydraulic pump from the rotating shaft 6 while allowing the displacement of the hydraulic pump 20 in the orthogonal direction.

By making each of the oil chambers 71 to 74 from an elastic member such as rubber, each of the oil chambers 71 to 74 may be configured with a variable volume. In such case, by a principle described in reference to FIG.5A and FIG.5B, when receiving the torque loaded on the hydraulic pump 20 from the rotating shaft 6 while allowing the displacement of the hydraulic pump in the orthogonal direction, each of the oil chambers 71 to 74 function as a damper. Thus, it is possible to damp the displacement of the hydraulic pump 20.

An outlet port 24a of the hydraulic pump 20 is preferably arranged in the front endplate 21 constituting an end face of the hydraulic pump 20 located on a side facing towards the hub 3. By this, it is possible to arrange the high pressure oil line 40 connecting the outlet port 24a of the hydraulic pump to an inlet port 31 of the hydraulic motor 30 in a space on the front side within the nacelle 8, thereby further improving the ease of performing the maintenance from the rear side of the hydraulic pump 20. So far explained is the case where the arm parts 21 (21b1, 21b2) and the outlet port 24a are formed in the front endplate 21. However, this is not limitative and the arm parts 21 (21b1, 21b2) and the outlet port 24a may be formed in the rear endplate 22.

In reference to FIG.2A and FIG.2B, the hydraulic motor 30 drives the generator 35 by high-pressure oil supplied from the hydraulic pump 20. The hydraulic motor 30 is arranged lateral relative to the axis of the hydraulic pump 20. The generator 35 is connected to the hydraulic motor 30 via the output shaft 34 and is located between the hub 3 and the hydraulic motor 30. By this, the hydraulic motor 30 and the generator 35 are not arranged on the rear side of the hydraulic pump 20, leaving enough maintenance space on the rear side of the hydraulic pump 20. As a result, it is possible to further improve the ease of performing the maintenance.

The generator 35 which is normally larger in size than the hydraulic motor 30 is arranged between the hub 3 and the hydraulic motor 30 (i.e. on the front side of the hydraulic motor 30). Thus, when the crane 18 lifts the hydraulic motor 30, the crane does not move over the generator 35. As a result, the ease of performing the maintenance is further enhanced.

The hydraulic motor 30 and the generator 35 are preferably mounted on a base plate 84. The base plate 84 is supported by the frame 81 via at least one of an elastic member and a damper. FIG.2B shows an exemplary case where a vibration insulating rubber 85 is installed between the base plate 84 and the frame 81. Both the elastic member and the damper have a function to damp the vibration. The elastic member itself is capable of damping the vibration, such as rubber. The damper, such as a hydraulic mechanism, structurally damps the vibration.

In the wind turbine generator 1, the hydraulic motor 30 and the generator 35 which are rotating machines, respectively vibrate as well. Thus, by mounting the hydraulic motor 30 and the generator 35 on the base plate 84 supported by the nacelle 8 via at least one of the elastic member and the damper mechanism, it is possible to damp the vibration of the hydraulic motor 30 and the generator 35 and it is also possible to firmly support the hydraulic motor 30 and the generator 35 by the nacelle 8.

In reference to FIG.4, the high-pressure oil line 40 connects the outlet port 24a of the hydraulic pump 20 and the inlet port 31 of the hydraulic motor 30 together. Meanwhile, the outlet 24a of the hydraulic pump 20 may be provided in the front endplate 21. Further, the inlet port 31 of the hydraulic motor 30 may be provided on a side face of the hydraulic motor 30.

The high-pressure oil line 40 is at least partially constituted of a flexible tube 43. Specifically, in the high-pressure oil line 40, a connection base to the outlet port 24a of the hydraulic port 24a and a connection base to the inlet port 31 of the hydraulic motor 30 may be made of a rigid coupling 41, 42 and between the rigid couplings 41 and 42, the flexible tube 43 may be provided. Meanwhile, the flexible tube 43 may be at least partially flexed between the rigid couplings 41 and 42. By this, it is possible to effectively absorb the relative displacement between the hydraulic pump 20 and the hydraulic motor 30, the vibration of the hydraulic pump 20 or the hydraulic motor 30, or the thermal expansion of the piping by means of the flexible tube 43. The flexible tube 43 may be arranged such as to bypass the rotating shaft 6.

The flexible tube 43 is a tube having flexibility and can be flexed freely to some extent. The flexible tube 43 is often called by other names such as a flexible pipe and a flexible hose. Specifically, the flexible tube may be any tube that can withstand an expected pressure of the pressurized oil during the operation of the power generating apparatus of renewable energy type (e.g. 350kgf/cm²). For instance, the flexible tube may be a tube which is made from various types of metal or resin such as PTFE, POM, PA, PVDF, FEP and PUR and which is reinforced with a steel wire such as a stainless wire.

As shown in FIG.4, the outlet port 24a of the hydraulic pump 20 is arranged on a side farther from the inlet port 31 of the hydraulic motor 30 than a plane M which is orthogonal to a line extending from the inlet port 31 to a central axis O of the hydraulic pump 20 and which is along the central axis O (a hatched portion of the hydraulic pump 20 in the drawing). In other words, the outlet port 24a of the hydraulic pump 20 is arranged across the plane M from the inlet port 31 of the hydraulic motor 30 and the high-pressure oil line 40 passes through the plane M to extend from the outlet port 24a of the hydraulic pump 20 to the inlet port 31 of the hydraulic motor 30.

Normally, the flexible tube 43 has characteristics such as a minimum bending radius which is prescribed in accordance with the material, the size and so on. It is known that the use of the flexible tube at the bending radius below the minimum bending radius shortens the life of the flexible tube.

The greater the distance between the outlet port 24a of the hydraulic pump 20 and the inlet port 31 of the hydraulic motor 30, the longer the flexible tube 43 can be. Thus, the bending radius of the flexible tube 43 is not much affected by the absorption of the relative displacement between the hydraulic pump and the hydraulic motor 30. For instance, as shown in FIG.6A and FIG.6B, a flexible tube 43-1 having a length of L1 and a flexible tube 43-2 having a length of L2 (<L1) are compared. In spite of having the same bending radius before deformation, after absorbing the relative displacement LD between the hydraulic pump 20 and the hydraulic motor 30, the change of the bending radius is smaller in the flexible tube 43-1 than the flexible tube 43-2. Therefore, to use the flexible tube 43 at the bending radius not less than the minimum bending radius, preferably the outlet port 24a of the hydraulic pump 20 and the inlet port 31 of the hydraulic motor 30 are arranged as far away from each other as possible to suppress the change of the bending radius of the flexible tube 43 caused by the absorption of the relative displacement between the hydraulic pump 20 and the hydraulic motor 30.

However, with space restriction in the nacelle 8, the hydraulic motor 30 may be inevitably arranged near the hydraulic pump 20. In such case, the distance between the outlet port 24a of the hydraulic pump 20 and the inlet port 31 of the hydraulic motor 30 can be increased only to a certain extent.

Thus, by arranging the outlet port 24a of the hydraulic pump 20 and the inlet port 31 of the hydraulic motor 30 to achieve the positional relationship as described above, even in the case where the hydraulic motor 30 is arranged near the hydraulic pump 20 due to the space restriction in the nacelle 8, it is possible to secure enough length of the high pressure oil line connecting the outlet port 24a and the inlet port 31. As a result, it is possible to increase the length of the flexible tube 43 so as to suppress the change of the bending radius of the flexible tube 43 caused by the absorption of the relative displacement between the hydraulic pump 20 and the hydraulic motor 30, and to use the flexible tub 43 at the bending radius not less than the minimum bending radius.

The above positional relationship between the outlet port 24a and the inlet port 31 is applied to the outlet port 24a and the inlet port 31 which are fluidly connected by the high pressure oil line 40. Thus, as shown in FIG.4, in the case where a pair of the hydraulic motors 30 are arranged on both sides of the hydraulic pump 20, two sets of the outlet port 24a and the inlet port 31 fluidly connected with each other exist and the above positional relationship is applied to each set of the outlet port 24a and the inlet port 31.

In the case where more than one output port 24a of the hydraulic pump 20 is formed in the endplate 21, the outlet ports 24a may be arranged on both sides of an axis of the hydraulic pump 20 respectively and preferably arranged at different heights. By this, the connection bases of the outlet ports 24a of the high pressure oil line 40 do not interfere with one another.

As shown in FIG.2A and FIG.2B, at the connection base to the inlet port 31 of the high pressure oil line, a branch line 46 may be provided. In such case, the branch pipe 46 is arranged between the inlet port 31 of the hydraulic motor 30 and the high pressure oil line 40. To the branch pipe 46, at least one accumulator 47 is connected. The accumulator 47 is supported to the nacelle side. The accumulator 47 may be an accumulator for accumulating high pressure oil or an accumulator for preventing pulsation.

Due to the action of the flexible tube 43, the branch pipe which connects the high pressure oil line 40 partially formed by the flexible tube 40 and the inlet port 31 of the hydraulic motor 30 is hardly affected by the vertical displacement of the hydraulic pump 20. Thus, by connecting the accumulator 47 to the branch pipe 46, even when there is displacement between the hydraulic pump 20 and the accumulator 47, the accumulator 47 can be supported to the nacelle side in a stable manner by a simple structure.

As described above, in the example, the torque loaded on the hydraulic pump 20 from the rotating shaft 6 can be received by the support 7 supporting the hydraulic pump 20 to the nacelle 7 while allowing the displacement o the hydraulic pump 20 in the orthogonal direction. Thus, a stationary part of the hydraulic pump 20 (the pump housing 19) is prevented from rotating with the rotating shaft 6 and the concentrated load on the main shaft bearings 11 and 12 and the pump bearing 17 due to the bending of the rotating shaft 6 can be reduced. Further, the high pressure oil line 40 is at least partially formed by the flexible tube 43 and thus, the relative displacement between the hydraulic pump 20 and the hydraulic motor 30 can be absorbed by the deformation of the flexible tube 43, thereby easing the load on the high pressure oil line 40. Furthermore, the pressurized oil streaming in the high pressure oil line 40 has high temperature, causing the high pressure oil line to thermally expand. However, by forming the high pressure oil line 40 at least partially by the flexible tube 43, the thermal expansion of the high pressure oil line 40 can be absorbed by the deformation of the flexible tube, thereby preventing generation of thermal stress.

In the present example, the high pressure oil line 40 may be at least partially formed by the flexible tube 43 and the low pressure oil line 50 connecting the outlet port 32 of the hydraulic motor 30 and the inlet port 28 of the hydraulic pump 20 to supply low pressure oil may be at least partially formed by the flexible tube 43. The low pressure oil line 50 is connected to the outlet port 32 formed in a side part of the hydraulic motor 30 at one end and to the inlet port 24b formed at a bottom of the hydraulic pump 20 at other end. In the low pressure oil line 50 between the outlet port 32 and the inlet port 24b, an accumulator 54 for preventing the pulsation, a tank 55 for storing the pressurized oil, a cooler for cooling the pressurized oil and a filter (not shown) for removing foreign objects in the pressurized oil are arranged.

Specifically, in the low pressure oil line 50, preferably the connection base to the outlet port 32 of the hydraulic motor 30, the connection base to the inlet port 24b of the hydraulic pump 20 and the connection part of the devices connected to the low pressure oil line 50 are formed by rigid couplings 51 and between the rigid couplings is partially connected by the flexible tube 43. The structures of the flexible tube 43 and the rigid coupling 51 are approximately the same as those of the high pressure oil line 40. However, the low pressure oil line 50 has temperature and pressure conditions which are not as strict as those of the high pressure oil line 40. In order to lower the component cost, it is possible to use a tube with lower heat resistance and pressure resistance than the high pressure oil line 40.

In this manner, by forming the low pressure oil line 50 at least partially by the flexible tube 43, it is possible to effectively absorb the relative displacement between the hydraulic pump 20 and the hydraulic motor 30, the vibration of the hydraulic pump 20 or the hydraulic motor 30, or the thermal expansion of the piping 50 by means of the flexible tube 43.

### (FIRST EMBODIMENT)

Next, the wind turbine generator 1 in relation to the first embodiment is now explained. The wind turbine generator 1 of the first embodiment is substantially the same as in the example described above except for a few points. Herein, the same reference numerals are given without adding explanations for those config-urations that are the same as in the example and mainly the few points that are different from the example are explained.

In reference to FIG.7A and FIG.7B, the wind turbine generator 1 of the first embodiment is explained. FIG.7A is a plan view showing an example structure of the devices in the nacelle in relation to the first embodiment. FIG.7B is a cross-sectional view taken along a line B-B of FIG.7A.

As shown in FIG.7A and FIG.7B, a hydraulic transmission 100 is provided with a hydraulic pump 120 and a hydraulic motor 130 and a generator 135 in the space inside the nacelle 8.

The bearing housings 10A and 10B are fixed to the frame 81 of the nacelle 8. The bearing housings 10A and 10B house the bearings 11 and 12 respectively. Further, the bearing housings 10A and 10B are connected to each other by the connection frame 10C (see FIG.3).

The front endplate 121 includes an annular part 121a constituting the end face of the hydraulic pump 120 and an arm part 121b projecting in the radial direction of the annular part 121a.

The arm part 121b is supported by the frame 81 via the support 7 in the same manner as the first embodiment. In this manner, the hydraulic pump 120 is supported by the nacelle 8.

The front endplate 121 may be a single-piece member with the annular part 121a and the part parts 121b formed integrally, or may be configured by forming the annular part 121a and the arm parts 121b separately and connecting the pieces by a fastening member.

The support 7 is configured to receive the torque applied to the hydraulic pump 120 from the rotating shaft 6 while allowing a displacement of the hydraulic pump 120 in the direction orthogonal to the axis of the rotating shaft 6. The detailed exemplary structure of the support 7 is the same as the one shown in FIG.5A and FIG.5B explained in the example and thus, is not further explained in details. By supporting the arm part 121b by the support in the manner described above, a stationary part of the hydraulic pump 20 (the pump housing 19) is prevented from rotating with the rotating shaft 6 and the concentrated load on the main shaft bearings 11 and 12 and the pump bearing 17 due to the bending of the rotating shaft 6 can be reduced.

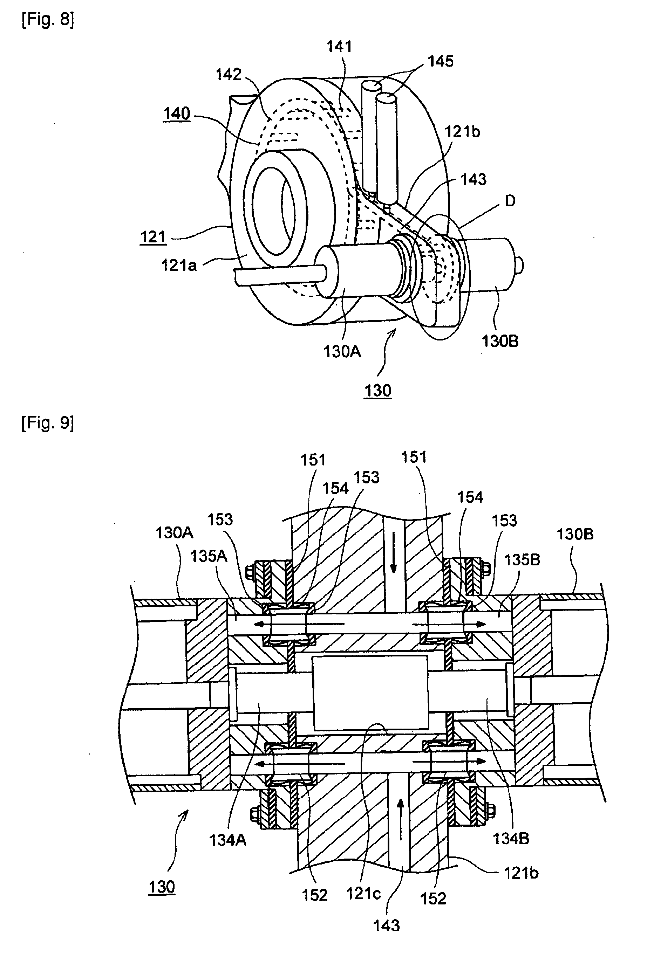

FIG. 8 is a perspective view of the hydraulic pump 120 and the hydraulic motor 130. An interior channel 140 inside the endplate 112 is transparently shown with a dotted line in FIG.8. As shown in the drawing, the interior channel 140 in which the high pressure oil generated in the pump module 25 flows, is formed inside the front endplate 121.

The interior channel 140 includes discharge flow paths 141 for drawing the high pressure oil from the pump module to the front endplate 121, a manifold 142 for connecting the discharge flow paths and a supply flow path 143 for the supply of the high pressure oil from the manifold 142 to the hydraulic motor 130. The discharge flow path 141 and the manifold 142 are provided in the annular part 121a of the front endplate 121. The supply flow path 143 is provided in the arm part 141b. In the first embodiment, a structure similar to the example is applied to the low pressure oil line.

The hydraulic motor 30 is fixed to the arm part 121b. Specifically, the front endplate 121 is formed with a pair of arm parts 121b projecting from left and right sides of the annular part 121a and the hydraulic motors 130 is fixed to the end part of the arm parts 121b. The hydraulic pump 120 and the hydraulic motor 130 are fluidly connected by the interior channel 140.

To the front endplate 121, at least one accumulator 145 may be connected. The accumulator 145 is connected fluidly to the supply flow path 143 formed in the arm part 121b and supported by the arm part 121b of the hydraulic motor 120. The accumulator 145 is provided, for instance, to accumulate energy of the high pressure oil and to prevent the pulsation.

In this manner, the accumulator 145 connected fluidly to the interior channel 140 is fixed to the front endplate 121. Thus, there is almost no displacement between the interior channel formed in the front endplate 121 and the accumulator 145, making it hard for the pressurized oil to leak.

FIG.9 is an enlarged cross-sectional view of a section D of FIG.8. As shown in FIG.9, the hydraulic motor 120 includes a pair of motor modules 130A and 130B that have a common structure. The pair of the motor modules 130A and 130B are fixed respectively to a pair of the arm parts 121b extending toward left and right sides of the hydraulic pump 120. Further, output shafts 134A and 134B of the motor modules 130A and 130B are connected with each other inside the arm part 121b. Specifically, a through-hole 121c is formed in the end part of the arm part 121b and the output shafts 134a and 134B of the pair of the motor modules 130A and 130B are inserted in the through-hole 121c such that the output shafts 134a and 134B are connected inside the through-hole 121c. By this, the motor modules 130A and 130B are supported on the front and rear faces of the arm part 121b and thus a shaft length from the support point becomes shorter. Thus, the vibration of the hydraulic motor 120 can be suppressed.

The supply flow path 143 formed in the arm part 121b branches into a pair of branched paths midway. The pair of branched paths are connected to oil flow paths 135A and 135B of the pair of the motor modules 130A and 130B respectively. Therefore, the high pressure operating oil discharged from the hydraulic pump 120 flows through the supply flow path 143 of the arm part 121b and enters the oil flow paths 135A and 135B of the pair of the motor modules 130A and 130B. The pair of the motor modules 130A and 130B are fixed to the arm part 121v at an end face. Meanwhile, a rubber sheet 151 is preferably provided between the end face of the each of the motor modules 130A and 130B and a fixing surface of the arm part 121b. The rubber sheet 151 is provided to prevent the operating oil from leaking outside even when the operating oil leaks from the oil flow path 135a and 135B, and to absorb the vibration of the motor modules 130A and 130B so that the vibration is not transmitted to the hydraulic pump 120. In such case, it is also preferable to provide a rubber sheet outside a flange which connects the motor module 130A, 130B to the arm part 121b.

As a detailed exemplary structure, the supply flow path 143 and the oil flow path 135A, 135B of the motor module 130A, 130B may be connected by a cylindrical tube seal 152. In such case, an annular rubber sheet 153 is preferably provided between an end of the tube seal 152 and an end of the oil flow path 135A, 135B so as to prevent the pressurized oil from leaking from the connection part. In a clearance on an outer periphery of the tube seal 152, a spring 154 is arranged in close contact with the outer periphery of the tub seal 152 in an elastically-deformed state. This prevents leaking of the pressurized oil from the clearance. Further, the rubber sheets 151 and 153 and the tube seal 152 are constituted of a material which is not limited as long as it has elasticity.

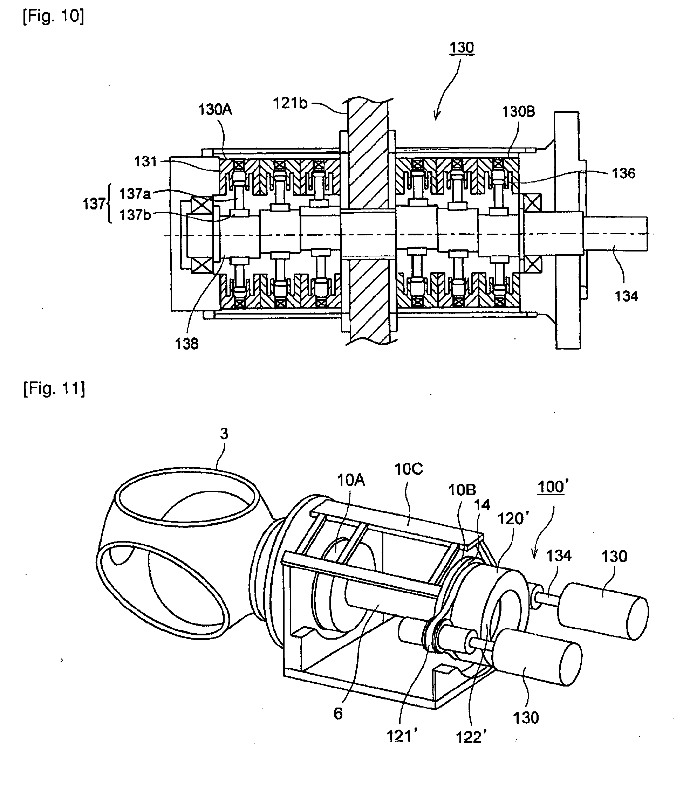

In reference to FIG.10, a detailed exemplary structure of the hydraulic motor 130 is explained. As described above, the hydraulic motor 130 is provided with the pair of the motor modules 130A and 130B.

Each of the motor modules 130A and 130B is provided with a cylinder block 11 which is formed into a continuous loop around an eccentric cam 138. The cylinder block 131 includes at least one cylinder 136. Each cylinder 136 is provided with the eccentric cam 138 and a set of a piston 137, a high pressure valve and a low pressure valve (the valves are not shown). In this embodiment, the cylinder block of a continuous loop is used. However, this is not limitative and it is possible to use a cylinder block which is separable in the circumferential direction.

The cylinder 136 is provided in the cylinder block 131 and inside the cylinder 136, a hydraulic chamber is formed between the cylinder 136 and the piston 137.

From a standpoint of smoothly converting a motion of the piston 137 moving upward and downward into a rotary motion of the eccentric cam 138, the piston 137 is formed by a piston body 137a and a piston roller or a piston shoe 137b. The piston body 137a slides inside the cylinder 136 and the piston roller or the piston shoe 137b is fixed to the piston body 137a and engages with a curved surface of the eccentric cam 138. Herein, the piston roller is a member which rotates in contact with the curved surface of the eccentric cam 138 and the piston shoe is a member which slides in contact with the curved surface of the eccentric cam 138.

The eccentric cam 138 is a cam which is provided eccentrically with respect to an axial center of the output shaft 134 connected to the generator 135. While the piston 137 completes one up-and-down motion, the eccentric cam 138 and the output shaft 134 to which the eccentric cam 138 complete one rotation.

A plurality of sets of the piston 137, the cylinder 137 and the eccentric cam 138 are arranged in the axial direction of the output shaft 134. Further, The eccentric cams 138 of the plurality of sets are arranged different from each other in phase.

In the motor module 130A, 130B having the above structure, the piston 137 is moved upward and downward by a pressure difference between the high pressure oil line and the low pressure oil line. In a motor stroke of the piston 137 starting from a top dead center and reaching a bottom dead center, the high pressure valve is opened and the low pressure valve is closed and thus, the high pressure oil is supplied to the hydraulic chamber. Then, in a discharge stroke of the piston 137 starting from the bottom dead center and reaching the top dead center, the high pressure valve is closed and the low pressure valve is opened and thus, the pressurized oil within the hydraulic chamber is discharged. In this manner, the high pressure oil introduced to the hydraulic chamber pushes the piston 135 downward to the bottom dead center in the motor stroke, thereby rotating the output shaft 134 with the eccentric cam 138.

In the hydraulic motor 130, the eccentric cams 138 of the plurality of the sets arranged in the axial direction of the hydraulic motor 30 are arranged different from each other in phase. As a result, vibrations from the motor modules 130A and 130B are balanced, thereby suppressing the vibrations.

As described above, in the present embodiment, the hydraulic motor 130 is fixed to the arm part 121b which constitutes a part of the end plate 121 of the hydraulic pump 120 and thus, there is almost no load due to the relative displacement between the hydraulic pump 120 and the hydraulic motor 130. It is now possible to prevent the load caused by the relative displacement between the hydraulic pump 120 and the hydraulic motor 130 from being applied to the piping between the hydraulic pump 120 and the hydraulic motor 130. In the second embodiment, there is no component that is considered as the piping between the hydraulic pump 120 and the hydraulic motor 130. Further, the endplate 121 having the arm part 121b projecting outward in the radial direction constitutes the end face of the hydraulic pump 120. The hydraulic motor 130 attached to the arm part 121b is fluidly connected with the hydraulic pump 120 via the interior channel 140 formed inside the end plate 121 having the arm part 121b and thus, it is not necessary to provide a piping between the hydraulic pump 120 and the hydraulic motor 130, in which the high pressure oil flows. Therefore, it is possible to avoid issues which arise in the case of providing a piping between the hydraulic pump 120 and the hydraulic motor 130, such as thermal expansion of the piping and leaking of the oil from the connection part between the pipings.

By fixing the hydraulic pump 120 to the rear end of the rotating shaft 6, operator's access to the hydraulic pump 120 from the rear side of the hydraulic pump 120 is improved and thus, it is easy to perform the maintenance of the hydraulic pump 120. Further, by providing the endplate 121 having the arm part 121b and supported by the nacelle 8 via the support 7 towards the hub 3 (on the front side), a support structure of the endplate 121 including the arm part 121 and the support 7 does not get in the way when a worker performs a maintenance on the hydraulic pump 120 from the rear side of the hydraulic pump 120.

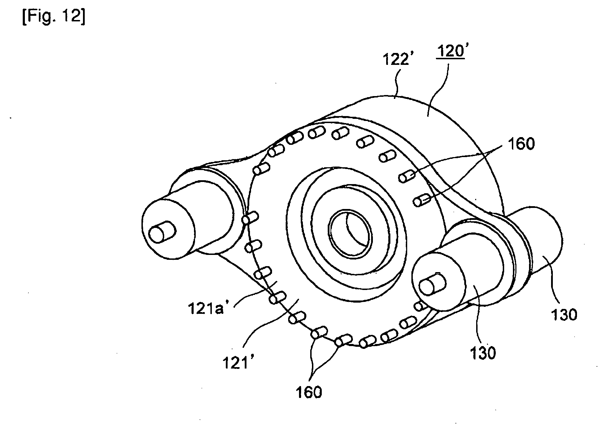

In the above embodiment, the hydraulic pump 120 is supported by the nacelle 8 by connecting the arm part 121b of the hydraulic pump 120 to the frame 81 via the support 7. However, this is not limitative and the hydraulic pump 120 may be supported by the nacelle 8 by fastening the hydraulic pump 120 to the bearing housing 10B on the rear side as shown in FIG.11 and FIG.12. FIG.11 is a perspective view showing an example structure of the devices in the nacelle 8 in relation to a modified example of the second embodiment. FIG.12 is a perspective view showing a connecting plane to a bearing housing.

In a hydraulic transmission 100' shown in FIG.11, a front endplate 121' of a hydraulic pump 120' is fastened to the bearing housing 10B via a vibration insulating bush. By this, the hydraulic pump 120' is supported by the nacelle 8. Specifically, as shown in FIG. 12, a plurality of bolts are provided on an annular part 121a' of the front endplate 121' in the circumferential direction and the vibration insulating bushes are attached to outer peripheries of the bolts. Bolt holes are formed on a side 14 of the bearing housing 10B facing the annular part 121a' and the bolts are inserted in the bolt holes. By fastening the bolts and the bolt holes together, the hydraulic pump 120' is supported by the nacelle 8 via the bearing housing 10B. Meanwhile, as the vibration insulating bushes 160 are interposed between the hydraulic pump 120' and the bearing housing 10B, the hydraulic pump 120'can be supported firmly while damping change of position of the hydraulic pump 120' by the vibration insulating bushes 160. The vibration insulating bushes 160 may be an elastic member which is capable of damping the vibration such as rubber or a member which is capable of damping the vibration by its structure such as a spring.

While the present invention has been described with reference to exemplary embodiments, it is obvious to those skilled in the art that various changes may be made without departing from the scope of the invention which is defined by the appended claims.

For example, in the above embodiment, the hydraulic pump is connected to one end of the rotating shaft 6, which is on the rear side. However, this is not limitative and the rotating shaft 6 may be arranged through the hydraulic pump. In such case, the bearings are arranged on the front side and the rear side of the hydraulic pump 20, 120, 120'.

### Reference Numerals

1 WIND TURBINE GENERATOR
2 ROTOR
3 HUB
4 BLADE
5 HYDRAULIC TRANSMISSION
6 ROTATING SHAFT
7 SUPPORT
8 NACELLE
9 TOWER
10A,10B BEARING HOUSING
10C CONNECTION FRAME
11 FIRST BEARING
12 SECOND BEARING
14 SIDE OF THE BEARING HOUSING
15 SHRINK-DISK COUPLING STRUCTURE
17 PUMP BEARING
18 CRANE
19 PUMP HOUSING
20,120,120' HYDRAULIC PUMP
21,121,121' FRONT ENDPLATE
21a,121a,121a' ANNULAR PART
21b,121b ARM PART
22,122,122' REAR ENDPLATE
24a OUTLET PORT
30,130,130' HYDRAULIC MOTOR
31 INLET PORT
34 OUTPUT SHAFT
35,130 GENERATOR
40 HIGH PRESSURE OIL LINE
41,42,51 RIGID COUPLING
43, FLEXIBLE TUBE
46 BRANCH PIPE
47,54,145 ACCUMULATOR
71 FIRST OIL CHAMBER
72 SECOND OIL CHAMBER
73 THIRD OIL CHAMBER
74 FOURTH OIL CHAMBER
75 FIRST PIPING
76 SECOND PIPING
81 FRAME
84 BASE PLATE
85 VIBRATION INSULATING RUBBER
140 INTERIOR CHANNEL
141 DISCHARGE FLOW PATH
142 MANIFOLD
143 SUPPLY FLOW PATH
151 RUBBER SHEET
152 TUBE SEAL
153 RUBBER SHEET

## Claims

1. A power generating apparatus of a renewable energy type which generates power from a renewable energy, comprising:
a hub (3) on which at least one blad (4) is mounted and which is rotated by the renewable energy received via the rotor blade (4),
a rotating shaft (6) which is connected to the hub (3);
a hydraulic pump (120) which is mounted on the rotating shaft (6) and which is driven by rotation of the rotating shaft (6),
a hydraulic motor (130) which is driven by pressurized oil from the hydraulic pump (120); and
a generator (135) which is coupled to the hydraulic motor (130), **characterized in that**
the hydraulic pump (120) comprises an endplate (121) having an arm part (121b) which projects radially outward from the hydraulic pump (120),
wherein the endplate (121) is formed with an interior channel (140) through which the pressurized oil flows to the arm part (121b); and
wherein the hydraulic motor (130) is fixed to the arm part (121b) and fluidly communicates with the hydraulic pump (120) via the interior channel.

2. The power generating apparatus of the renewable energy type
according to claim 1, further comprising
a support (7) which provides a reaction torque to the hydraulic pump (120) from
the rotating (6) shaft while allowing a displacement of the hydraulic pump (120)
in a direction perpendicular to an axis of the rotating shaft, the arm part (121b) of the hydraulic pump (120) being supported by a nacelle through the
support.

3. The power generating apparatus of the renewable energy type
according to claim 2,
wherein the hydraulic pump (120) is fixed to an end of the rotating shaft (6)
which is farther from the hub (3), and
wherein the endplate (121) constitutes an end face of the hydraulic pump (120)
located on a side facing towards the hub (3).

4. The power generating apparatus of the renewable energy type
according to claim 1, further comprising:
a main shaft bearing (11,12) through which the rotating shaft is rotatably
supported by the nacelle,
wherein the hydraulic pump (120) is fastened to a bearing housing (10B) of the
main shaft bearing via a vibration insulating bush (160).

5. The power generating apparatus of the renewable energy type
according to claim 1,
wherein the hydraulic moto (130) includes a pair of motor modules (130A) that have the same structure, and
wherein the pair of the motor modules (130A) have output shafts (134A, 134B) that are coupled to each other inside the arm part (121b).

6. The power generating apparatus of the renewable energy type according to claim 5, wherein each of the pair of the motor modules (130A) includes a plurality of sets of: a cylinder (136), a piston (137) sliding inside the cylinder (136) by the pressurized oil; an eccentric cam (138) rotated by the piston (137), the plurality of sets (130A) being arranged in an axial direction of the hydraulic motor (130), and wherein the eccentric cams (138) of the sets are different from each other in phase.

7. The power generating apparatus of the renewable energy type according to claim 1, wherein an accumulator (145) is fixed to the endplate (121); said accumulator (145) being fluidly connected to the interior channel.

## Patentansprüche

1. Leistungserzeugungsvorrichtung des Typs für erneuerbare Energie, die Leistung aus erneuerbarer Energie erzeugt, wobei die Vorrichtung Folgendes umfasst:
eine Nabe (3), an der wenigstens ein Flügel (4) angebracht ist und die durch über den Rotorflügel (4) aufgenommene erneuerbare Energie gedreht wird;
eine Rotationswelle (6), die mit der Nabe (3) verbunden ist;
eine Hydraulikpumpe (120), die an der Rotationswelle (6) angebracht ist und die durch die Rotation der Rotationswelle (6) angetrieben wird;
einen Hydraulikmotor (130), der durch mit Druck beaufschlagtes Öl von der Hydraulikpumpe (120) angetrieben wird; und
einen Generator (135), der mit dem Hydraulikmotor (130) gekoppelt ist;
**dadurch gekennzeichnet, dass**
die Hydraulikpumpe (120) eine Stirnplatte (121) mit einem Armabschnitt (121b) umfasst, der von der Hydraulikpumpe (120) radial nach außen ragt;
wobei die Stirnplatte (121) mit einem inneren Kanal (140) ausgebildet ist, durch den das mit Druck beaufschlagte Öl zu dem Armabschnitt (121b) strömt; und
wobei der Hydraulikmotor (130) an dem Armabschnitt (121b) befestigt ist und fluidtechnisch mit der Hydraulikpumpe (120) durch den inneren Kanal in Verbindung steht.

2. Leistungserzeugungsvorrichtung des Typs für erneuerbare Energie nach Anspruch 1, die ferner Folgendes umfasst:
einen Träger (7), der ein Gegendrehmoment für die Hydraulikpumpe (120) von der Rotationswelle (6) bereitstellt, wobei eine Verschiebung der Hydraulikpumpe (120) in eine Richtung senkrecht zu einer Achse der Rotationswelle zugelassen wird, wobei der Armabschnitt (121b) der Hydraulikpumpe (120) über den Träger durch eine Gondel unterstützt wird.

3. Leistungserzeugungsvorrichtung des Typs für erneuerbare Energie nach Anspruch 2,
wobei die Hydraulikpumpe (120) an einem Ende der Rotationswelle (6), das weiter entfernt von der Nabe (3) ist, befestigt ist; und
wobei die Stirnplatte (121) eine Stirnfläche der Hydraulikpumpe (120) bildet, die sich auf einer Seite befindet, die der Nabe (3) zugewandt ist.

4. Leistungserzeugungsvorrichtung des Typs für erneuerbare Energie nach Anspruch 1, die ferner Folgendes umfasst:
ein Hauptwellenlager (11, 12), durch das die Rotationswelle durch die Gondel drehbar unterstützt ist,
wobei die Hydraulikpumpe (120) an einem Lagergehäuse (10B) des Hauptwellenlagers über eine vibrationsdämpfende Buchse (160) befestigt ist.

5. Leistungserzeugungsvorrichtung des Typs für erneuerbare Energie nach Anspruch 1,
wobei der Hydraulikmotor (130) ein Paar Motormodule (130A) enthält, die den gleichen Aufbau haben, und
wobei das Paar Motormodule (130A) Ausgangswellen (134A, 134B) aufweist, die im Inneren des Armabschnitts (121b) miteinander gekoppelt sind.

6. Leistungserzeugungsvorrichtung des Typs für erneuerbare Energie nach Anspruch 5,
wobei jedes Modul des Motormodul-Paars (130A) mehrere Sätze von Folgendem enthält: einen Zylinder (136), einen Kolben (137), der im Inneren des Zylinders (136) durch das mit Druck beaufschlagte Öl gleitet; einen Exzenternocken (138), der durch den Kolben (137) gedreht wird; wobei die mehreren Sätze (130A) in einer axialen Richtung des Hydraulikmotors (130) angeordnet sind und wobei sich die Exzenternocken (138) der Sätze in ihrer Phase voneinander unterscheiden.

7. Leistungserzeugungsvorrichtung des Typs für erneuerbare Energie nach Anspruch 1,
wobei an der Stirnplatte (121) ein Akkumulator (145) befestigt ist; wobei dieser Akkumulator (145) mit dem inneren Kanal fluidtechnisch verbunden ist.

## Revendications

1. Appareil générateur d'électricité du type à énergie renouvelable, générant de l'électricité à partir d'une énergie renouvelable, comportant :
un moyeu (3) sur lequel est montée au moins une pale (4) et qui est entraîné en rotation par l'énergie renouvelable reçue via la pale (4) de rotor ;
un arbre tournant (6) qui est relié au moyeu (3) ;
une pompe hydraulique (120) qui est montée sur l'arbre tournant (6) et qui est actionnée par la rotation de l'arbre tournant (6) ;
un moteur hydraulique (130) qui est actionné par de l'huile sous pression en provenance de la pompe hydraulique (120), et
un générateur (135) qui est couplé au moteur hydraulique (130),
**caractérisé en ce que**
la pompe hydraulique (120) comporte une plaque (121) d'extrémité comprenant une partie (121b) de bras qui dépasse radialement vers l'extérieur à partir de la pompe hydraulique (120),
la plaque (121) d'extrémité étant formée avec un conduit intérieur (140) à travers lequel l'huile sous pression s'écoule jusqu'à la partie (121b) de bras, et
the moteur hydraulique (130) étant fixé à la partie (121b) de bras et communiquant fluidiquement avec la pompe hydraulique (120) via le conduit intérieur.

2. Appareil générateur d'électricité du type à énergie renouvelable selon la revendication 1, comportant en outre
un appui (7) qui exerce un couple de réaction sur la pompe hydraulique (120) à partir de l'arbre tournant (6) tout en permettant un décalage de la pompe hydraulique (120) dans une direction perpendiculaire à un axe de l'arbre tournant, la partie (121b) de bras de la pompe hydraulique (120) étant soutenue par une nacelle par l'intermédiaire de l'appui.

3. Appareil générateur d'électricité du type à énergie renouvelable selon la revendication 2,
la pompe hydraulique (120) étant fixée à une extrémité de l'arbre tournant (6) la plus éloignée du moyeu (3) ; et
la plaque (121) d'extrémité constituant une face d'extrémité de la pompe hydraulique (120) située d'un côté orienté vers le moyeu (3).

4. Appareil générateur d'électricité du type à énergie renouvelable selon la revendication 1, comportant en outre :
un palier principal (11, 12) d'arbre par l'intermédiaire duquel l'arbre tournant est guidé en rotation par la nacelle,
la pompe hydraulique (120) étant fixée à un corps (10B) de palier du palier principal d'arbre via une douille (160) d'isolation des vibrations.

5. Appareil générateur d'électricité du type à énergie renouvelable selon la revendication 1,
le moteur hydraulique (130) comprenant une paire de modules (130A) de moteur qui présentent la même structure, et
la paire de modules (130A) de moteur comprenant des arbres (134A, 134B) de sortie qui sont couplés l'un à l'autre à l'intérieur de la partie (121b) de bras.

6. Appareil générateur d'électricité du type à énergie renouvelable selon la revendication 5,
chaque module de la paire de modules (130A) de moteur comprenant une pluralité d'ensembles constitués : d'un cylindre (136) ; d'un piston (137) coulissant à l'intérieur du cylindre (136) sous l'action de l'huile sous pression ; d'une came excentrique (138) mise en rotation par le piston (137), la pluralité d'ensembles (130A) étant disposée dans une direction axiale du moteur hydraulique (130) et les cames excentriques (138) des ensembles différant les unes des autres par leur phase.

7. Appareil générateur d'électricité du type à énergie renouvelable selon la revendication 1,
un accumulateur (145) étant fixé à la plaque (121) d'extrémité, ledit accumulateur (145) étant relié fluidiquement au conduit intérieur.
